Europäisches Patentamt

(19) European Patent Office

Office européen des brevets

(11) Numéro de publication: **0 246 955**
**A2**

## (12) DEMANDE DE BREVET EUROPEEN

(21) Numéro de dépôt: **87401087.9**

(22) Date de dépôt: **14.05.87**

(51) Int. Cl.³: **F 02 B 53/08**
**F 01 C 1/18**

(30) Priorité: **16.05.86 US 863713**

(43) Date de publication de la demande:
**25.11.87 Bulletin 87/48**

(84) Etats contractants désignés:
**CH DE FR GB IT LI**

(71) Demandeur: **Sampson, Joseph H.**
**106 Charlcote Road**
**Baltimore Maryland 21218(US)**

(72) Inventeur: **Sampson, Joseph H.**
**106 Charlcote Road**
**Baltimore Maryland 21218(US)**

(74) Mandataire: **L'Helgoualch, Jean**
**OFFICE PICARD 134 Boulevard de Clichy**
**F-75018 Paris(FR)**

(54) Moteur à combustion interne.

(57) Moteur à combustion interne possédant dans le sens du passage du fluide moteur une section de compression, une chambre de combustion capable de fonctionner en continu et une section motrice, chacune desdites sections compresseur et motrice comprenant une pompe volumétrique rotative dont le déplacement est sensiblement proportionnel à la rotation angulaire de son arbre, la pompe motrice faisant tourner la pompe de compression, le rapport K du volume Vc déplacé par la pompe de compression au volume Vm déplacé par la pompe motrice lorsque l'arbre de celle-ci tourne par un certain angle étant supérieur à l'unité.

1 / 2

FIG.1

## Moteur à combustion interne

Cette invention concerne les moteurs à combustion interne, et en particulier les moteurs du type comprenant successivement une section compresseur, une chambre de combustion à fonctionnement continu, et une section motrice mue par la pression des gaz sortant de la chambre de combustion.

Des exemples de moteurs du type de la présente invention sont exposés dans les brevets US 3.940.925, 4.012.903 et 3.996.899. La composante essentielle de la section compresseur ainsi que de la section motrice est une pompe à engrenages, c'est-à-dire une pompe formée d'une paire de roues dentées qui s'engrènent et tournent dans un carter, ou bien d'une seule roue dentée qui tourne dans un carter. Dans le cas du compresseur, des portions élémentaires d'un mélange combustible gazeux ou bien simplement d'air, sont acheminées dans les espaces définis par chaque paire de dents adjacentes et la paroi intérieure du carter et se trouvent de cette manière forcées sous pression dans la chambre de combustion. La chambre de combustion fonctionne de façon continue avec ou sans un moyen d'allumage, brûlant soit le mélange gazeux délivré par la section compresseur, soit le mélange qui résulte de l'air délivré par le compresseur et d'un combustible injecté dans la chambre de combustion. Les gaz chauds de combustion, sous pression, passent par la sortie de la chambre de combustion dans l'entrée de la section motrice qui, comme le compresseur, comprend une pompe à engrenages ou bien même une seule roue dentée dans un carter. Les gaz de combustion font tourner les engrenages de la section motrice, qui devient ainsi moteur. Une partie de la puissance ainsi produite est transférée mécaniquement au compresseur pour le faire tourner.

Aucun moteur du type qu'on vient de décrire n'est utilisé commercialement à la connaissance du demandeur. La raison pour cela est une faute fondamentale dans les conceptions antérieures dépendantes du rapport volumétrique, discutée plus loin, dont le résultat était un rendement inadmissiblement bas.

Ces moteurs, tout comme le moteur qui est l'objet de la présente invention, ont une certaine similarité avec la turbine à gaz (par ex. le moteur à réaction utilisé dans les avions), en ayant les trois phases de compression, combustion, expansion, dans des unités séparées. Cependant, les dynamiques internes de la turbine sont entièrement différentes, dépendant de la quantité de mouvement des molécules de gaz à haute vitesse, plutôt que de la pression interne.

Selon les principes du moteur objet de la présente demande, le rendement des moteurs du type décrit antérieurement est énormément augmenté par rapport à celui qui était obtenu avec des moteurs tels que conçus selon l'enseignement antérieur. Les nouvelles conceptions qui rendent possible cette augmentation sont applicables plus généralement à des moteurs basés sur des pompes à déplacement constant, c'est-à-dire moteurs comprenant deux pompes à déplacement constant ayant une chambre de combustion en fonctionnement continu entre les deux. Précisons qu'on entend par pompe à déplacement constant toute pompe volumétrique rotative pour laquelle le déplacement d'un fluide incompressible qui passe par la pompe est sensiblement proportionnel à la rotation angulaire de l'arbre de la pompe. Donc, pour une rotation angulaire donnée de l'arbre, une quantité correspondante d'un fluide incompressible passera par la pompe. La présente invention envisage l'utilisation de pompes à engrenages, au vu de leur simplicité. La nature mécanique des pompes est sans grande importance pourvu que ces pompes satisfassent dans une mesure raisonnable à la définition qu'on vient de donner d'une pompe à déplacement constant.

Dans le présent moteur, comme dans ceux décrits dans les brevets précités, la première pompe comprime l'air, éventuellement mélangé au combustible, le contraignant à passer dans une chambre de combustion où l'allumage aura lieu. Les gaz chauds sous pression ainsi produits et en voie d'expansion passent à la seconde pompe, la faisant tourner et agir comme un moteur. Ce moteur produit une puissance utile et fait également tourner le compresseur moyennant un couplage mécanique. Le présent moteur, toutefois, diffère d'une façon cruciale en ce que le rapport volumétrique de la pompe compresseur à la pompe moteur est beaucoup plus élevé que ce qu'on croyait possible auparavant ; et ce rapport volumétrique plus élevé a pour conséquence un rendement grandement supérieur. Par rapport volumétrique on entend $V_c/V_m$, où $V_c$ et $V_m$ sont les volumes déplacés respectivement par la pompe compresseur et la pompe moteur pour une rotation de l'arbre moteur d'un angle donné, avec l'hypothèse d'avoir un rapport constant entre les angles de rotation des deux pompes.

Donc, ce rapport volumétrique ne dépend ni de l'ampleur de l'angle ni de la vitesse de rotation du moteur. Désormais ce rapport sera noté K, et selon la présente invention K doit toujours être supérieur à 1,0 et de façon pratique devrait être beaucoup plus grand que l'unité, typiquement vers 2,5 pour moteurs ayant une température de chambre de combustion relativement basse (par exemple 700°C ) et 5,0 ou plus pour moteurs opérant à des températures de chambre de combustion assez élevées (par exemple 1400°C). La valeur de K n'est point arbitraire. Pourtant, comme on verra dans ce qui suit, les valeurs appropriées de K dépendent de la température de fonctionnement du moteur et de l'application des principes de la thermodynamique à ce moteur, d'où il résultera que K a une certaine gamme de valeurs pour lesquelles le rendement et la puissance sont optimaux.

Les brevets US précités ne font pas usage du terme "rapport volumétrique", mais font appel à une terminologie qui inéluctablement mène à des valeurs de K < 1.

Nous désignons par K le rapport volumétrique, $K = V_c/V_m$, c'est-à-dire, le rapport du déplacement $V_c$ du compresseur au déplacement $V_m$ du moteur lorsque l'arbre du moteur effectue une rotation d'un certain angle. Bien entendu, le rapport ne dépend pas de la grandeur de cet angle. Les enseignements des configurations de la technique antérieure mènent inévitablement à des valeurs K < 1, valeurs qui ne sont pas précisées autrement. Bien que le terme rapport volumétrique ne figure pas dans les brevets US précités, il y est dit clairement que le moteur doit être tel que le rapport K soit inférieur à l'unité. Le brevet 4.012.903 déclare que la surface de travail des roues dentées motrices est supérieure à celle des roues du compresseur, de sorte que l'explosion des gaz dans la chambre de combustion agit toujours de façon à faire avancer les roues motrices, au lieu d'arrêter le moteur en agissant sur les roues du compresseur. Le brevet 3.996.899 spécifie que le compresseur doit tourner à une vitesse volumétrique inférieure à celle dudit moteur. Le brevet 3.940.925 déclare que les gaz explosants exercent aussi quelques forces contre les engrenages du compresseur et tendent donc à produire une rotation dans le sens contraire à celui souhaité. Donc l'aire des engrenages du moteur sur laquelle la pression des gaz d'explosion agit est plus grande que l'aire des engrenages du compreseur dans un rapport proportionnel aux largeurs des engrenages. Donc dans tous les cas le rapport volumétrique doit être inférieur à l'unité à cause de la contre pression qui, dans l'esprit des demandeurs précédents, tendrait autrement à faire tourner le compresseur à contresens, empêchant le fonctionnement du moteur.

Cette conclusion est le résultat d'une conception fondamentalement erronée. Le présent demandeur a découvert moyennant une analyse entièrement nouvelle des processus que des valeurs de K bien supérieures à l'unité sont non seulement possibles mais sont en effet essentielles pour atteindre des niveaux pratiques de rendement. Cela est loin d'être évident et n'apparaît qu'à travers les équations du demandeur. Donc, pour la première fois le moteur basé sur des pompes à déplacement constant devient un moteur pratique, rivalisant en rendement avec les moteurs Diesel et à essence usuels, tout en offrant des avantages significatifs sur les deux.

Le problème de la contre-pression envisagée dans l'enseignement de l'art antérieur s'est montré inexistant. La raison n'est pas évidente ; c'est peut-être que le gaz en voie d'entrer dans la chambre de combustion agit comme un coussin, de sorte que la pression maximale de la chambre n'agit pas sur le compresseur.

- La figure 1 représente schématiquement une coupe d'un moteur basé sur les pompes à déplacement constant, conforme à la présente invention ;

- la figure 2 est une coupe schématique d'une autre réalisation de la section motrice ;

- la figure 3 est le graphique de la pression par rapport au volume d'une portion élémentaire de gaz passant par le moteur de la figure 1;

- la figure 4 est un graphique du rendement par rapport aux valeurs de K; et

- la figure 5 est un graphique de la puissance effective par rapport à K en unité arbitraire.

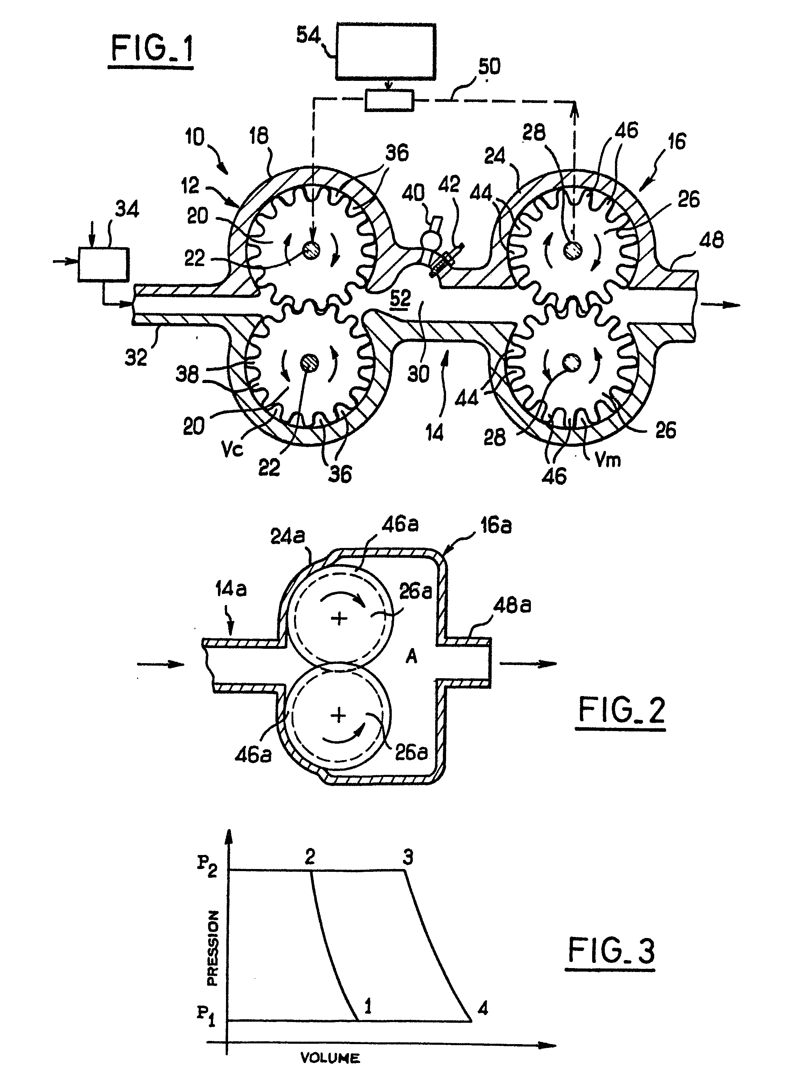

La figure 1 montre schématiquement une pompe à déplacement constant dans la forme d'un moteur à pompes à engrenages (10) ayant successivement, dans le sens du flux, une section compresseur (12), une section combustion (14) et une section motrice (16). La section de compression (12) comprend un carter (18) ayant à l'intérieur deux roues dentées (20) qui s'engrènent, montées sur arbres (22), et agencées pour tourner dans le sens des flèches. De manière similaire, la section motrice (16) comporte un carter (24) contenant deux roues dentées (26) qui s'engrènent, montées sur arbre (28), et agencées pour tourner dans le sens indiqué par les flèches. La section combustion (14) comprend une chambre de combustion (30) ayant son entrée en communication avec la sortie du compresseur (12) et sa sortie en communication avec l'entrée de la section motrice (16).

Durant le fonctionnement du moteur (10) un gaz combustible, par exemple un mélange d'un carburant vaporisé et d'air venant d'un carburateur (34), entre par un orifice d'admission (32) dans la pompe à compression d'où il est transporté en portions élémentaires dans les espaces (36) définis entre deux dents contiguës et la surface intérieure du carter (18). A l'orifice de sortie du carter les portions élémentaires de gaz sont déchargées dans la chambre de combustion (30). Le gaz ainsi introduit dans la chambre de combustion peut être simplement de l'air, auquel cas le carburant est injecté directement dans la chambre de combustion (30) par un orifice (40). La combustion dans la chambre de combustion (30) est continue dans les conditions de température et de pression y existant. Un dispositif d'allumage tel qu'une bougie est installé pour le démarrage du moteur et, si nécessaire ou désiré, pour maintenir la combustion pendant la marche. Les produits de combustion chauffés et sous pression passent dans la section motrice (24) où ils sont transportés dans les espaces (44) entre deux dents adjacentes (46) et la surface intérieure du carter (24). Les engrenages (26) sont ainsi mûs dans le sens des flêches, et le gaz s'échappe par un orifice de sortie (48) vers l'extérieur ou vers un autre dispositif susceptible d'extraire l'ènergie du gaz. Une certaine partie de la puissance obtenue des engrenages (26) mis en rotation est transférée aux engrenages du compresseur afin de faire tourner ceux-ci, par exemple au moyen d'une liaison en rotation mécanique (50).

Selon l'invention, la valeur de K pour ce moteur, comme on a dit plus haut, est supérieure à 1,0. Cela est facilement réalisé en construisant la liaison en rotation (50) de manière à faire tourner la pompe-compresseur (12) pour obtenir une valeur de $V_c$ plus grande que $V_m$, c'est-à-dire à une vitesse de rotation supérieure à celle de la pompe moteur (16), en s'assurant d'avoir les deux pompes identiques. Un avantage d'une telle réalisation est que la liaison en rotation (50) peut être variable, de sorte que la vitesse de la pompe-compresseur (12) par rapport à la pompe-moteur (16), est donc la valeur de K, peuvent être modifiées pendant le fonctionnement du moteur pour accommoder les variations de la charge du moteur. La construction de la pompe-compresseur avec un déplacement supérieur à celui de la pompe-moteur donnera un moteur à grand K fixe, si la vitesse des deux pompes sont supposées égales, ce qui pourrait suffire pour certains moteurs. Mais une liaison en rotation variable est aussi avantageuse dans ce cas.

On comprendra que le moteur (10) a été décrit dans une forme simplifiée pour mieux illustrer ses principes de base. Dans la pratique, le moteur aurait divers dispositifs de contrôle, et la section de compression, la chambre de combustion et la section motrice pourraient être beaucoup plus complexes.

Tous les ingrédients ci-dessus, à l'exception du rôle de K, et donc du rapport entre la section compresseur et la section motrice, sont connus dans l'état de l'art. La présente invention est basée sur la découverte, par des principes fondamentaux de la thermodynamique, et par un choix convenable des paramètres, considérés impossible dans l'art antérieur, de la possibilité de produire un haut rendement sur un moteur utilisant des pompes à déplacement constant. Plus spécifiquement, la présente invention démontre, en faisant appel à la thermodynamique, qu'il y a une étendue de valeurs pour le rapport volumétrique K défini plus haut, dépendant de la température de fonctionnement (la température dans la chambre de combustion), qui donne une capacité de rendement beaucoup plus grande que celle envisagée dans les conceptions précédentes, où la valeur de K était nécessairement bornée, dans l'intervalle de zéro à un ; les valeurs supérieures à l'unité étaient expressément exclues. Dans la présente demande il est démontré que le rapport volumétrique K doit avoir une valeur bien supérieure à 1, typiquement de l'ordre de cinq ou plus.

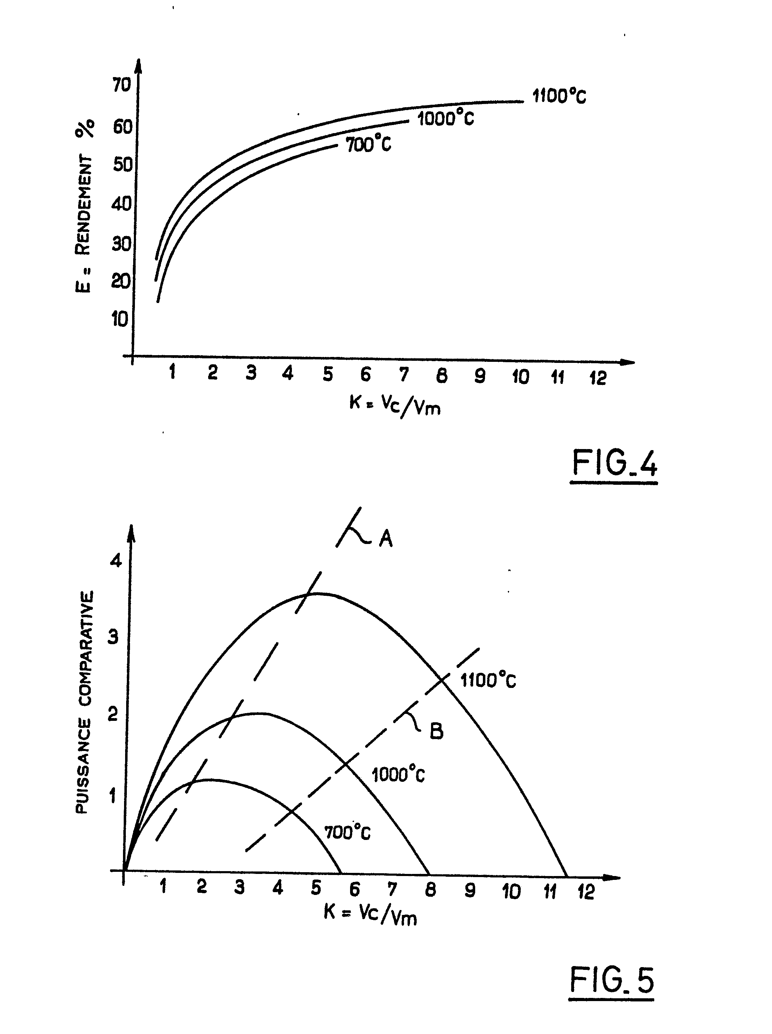

Des limites précises pour la gamme des valeurs utiles de K, dépendantes des conditions de fonctionnement, sont déterminées essentiellement par la température de fonctionnement. Entre ces limites la valeur de K choisie détermine le rendement et la puissance, les plus hautes valeurs de K donnant un rendement accru mais aux dépens de la puissance disponible, les valeurs de K plus basses fournissant plus de puissance mais au prix d'un rendement réduit. Aussi, K pour un moteur donné, comme dans la figure 1, peut être modifié pendant le fonctionnement, moyennant une liaison en rotation (50) variable. Une telle réalisation permettrait de choisir K pour la puissance maximale lorsque la demande l'exige et puis d'augmenter K pour obtenir un rendement amélioré dans des conditions de moindre effort. A cette fin la transmission variable (50) peut être contrôlée par un dispositif (54) susceptible de mesurer la charge, de sorte que la vitesse du compresseur sera augmentée ou diminuée par rapport à la vitesse du moteur suivant une diminution ou augmentation respective de la charge, avec une conséquente augmentation ou diminution de K. Cette possibilité a une utilité particulière lorsque le moteur fonctionne avec des valeurs de K comprises entres les droites A et B sur la figure 5. Cet intervalle de valeurs sera analysé plus loin.

Maintenant on passe à l'analyse thermodynamique du moteur, sous l'hypothèse usuelle que le régime est constant (cf. fig. 3).

De l'air sans carburant, entre dans le compresseur (1) à pression ambiante $P_1$ et à température ambiante $T_1$. Nous suivons la progression d'une petite portion élémentaire $V_c$ d'air lorsqu'elle passe par la machine. Entrant dans la première pompe à déplacement constant, la portion d'air est comprimée jusqu'à la pression $P_2$ de la chambre de combustion. La compression a lieu rapidement et donc peut être considérée comme adiabatique. Ensuite la portion d'air comprimé subit un chauffage à pression constante dans la chambre de combustion (2) jusqu'à ce qu'elle atteigne la température $T_2$ de la chambre. Bien entendu, il y a expansion de la portion pendant la phase de chauffage, et en fait elle doit se dilater jusqu'à ce qu'elle atteigne le volume $V_m$ d'une portion identique d'air (chauffée et mélangée avec des produits de combustion) qui est en train de quitter la chambre pour entrer dans la pompe motrice (Ceci est une conséquence du régime constant que nous avons supposé). Enfin, la portion d'air sous étude est libérée à l'atmosphère, où elle retourne adiabatiquement à la pression ambiante $P_1$. La figure 3 montre le diagramme qui représente la pression et le volume de la portion pendant ce processus. Dans ce cycle, l'air entre dans le compresseur à la pression atmosphérique au point 1 du diagramme. Il est comprimé adiabatiquement de 1 à 2 quand il est forcé dans la chambre de combustion. Le chauffage a lieu à pression constante de 2 à 3, le gaz se dilatant à cause de l'addition d'énergie thermique produite par la combustion du carburant. Enfin, quand le gaz s'échappe de la machine, il se dilate adiabatiquement de 3 à 4, retombant à la pression atmosphérique.

Ici bien entendu on a fait usage des approximations usuelles dans l'analyse des machines thermiques. On notera que le cycle thermodynamique est celui à pression constante, familier par ex. dans les applications aux turbines à gaz. Le rendement E de ce cycle, comme il est démontré dans la science de la thermodynamique est égal à

$$E = 1 - (P_1/P_2)^{\frac{\tau - 1}{\tau}}, \qquad (1)$$

où $\tau$ est le rapport des chaleurs spécifiques de l'air, à peu près égal à 1,40.

Pour aller plus loin nous aurons besoin de quelques faits de la thermodynamique, d'abord l'équation d'état $PV = RT$ bien connue, où $V$ désigne le volume d'une quantité de gaz, $P$ sa pression, $T$ sa température absolue; $R$ est une constante qui dépend des unités choisies.

Retournant à la portion d'air $V_c$, nous avons avant compression $P_1 V_c = RT_1$. Après expansion dans la chambre de combustion cette relation devient $P_2 V_m = RT_2$. En rapportant la première de ces relations à la seconde, le facteur $R$ disparaît, et il en résulte

$$\frac{P_1 V_c}{P_2 V_m} = \frac{T_1}{T_2}$$

Nous rappelons que le rapport volumétrique est

$$K = V_c/V_m \qquad (2)$$

Donc l'équation précédente peut s'écrire

$$\frac{P_2}{P_1} = K \cdot \frac{T_2}{T_1}$$

Ensuite considérons un gaz qui subit une compression adiabatique de l'état $P_1$, $V_1$ à l'état $P_2$, $V_2$. Nous avons alors la relation connue

$$P_2/P_1 = (V_1/V_2)^{\tau}$$

$\tau$ comme dans (1). Le travail fourni est

$$\frac{P_2V_2 - P_1V_1}{\tau - 1} = \frac{P_1V_1}{\tau - 1} \ [(P_2/P_1)^{1-1/\tau} - 1]$$

Introduisons les abréviations

$$p = P_2/P_1, \quad t = T_2/T_1, \quad c = 1 - 1/\tau \qquad (4)$$

Donc p = Kt, d'après (3), et il s'ensuit que le travail $W_c$ fourni par le compresseur peut s'écrire

$$W_c \ = \frac{P_1V_c}{\tau - 1} (K^c t^c - 1) = 2,5KP_1V_m (K^c t^c - 1) \qquad (5)$$

Ce travail est fourni par le moteur. Le travail total $W_m$ fourni par le moteur dans l'intervalle de temps considéré est $W_m = P_2V_m = KP_1V_m t$, à l'aide de (3). Le travail net est donc

$$W = W_m - W_c = 2,5 \ kP_1V_m(0,4t - K^c t^c + 1) \qquad (6)$$

Le rendement (1) peut maintenant s'écrire

$$E = 1 - \frac{1}{K^c t^c} \ , \qquad (7)$$

Les équations (6) et (7) sont nouvelles, ayant été obtenues pour la première fois par le demandeur, et elles forment la base scientifique de l'invention décrite dans cette demande.

Les équations sont des approximations, comme c'est toujours le cas dans l'analyse des machines thermiques parce qu'elles seront affectées dans une certaine mesure par la sollicitation du moteur et par des changements de vitesse et aussi parce que le cycle n'est pas strictement à pression constante.

A l'aide des équations (6) et (7) il est possible de faire des calculs et d'illustrer les résultats graphiquement. On suppose que le moteur auquel on applique les calculs est de taille suffisante pour brûler assez de carburant pour produire la puissance indiquée dans les calculs. D'abord choisissons trois valeurs typiques du rapport t des températures comme suit :

t = 3,38, correspondant à une température $T_2$ de 700°C
dans la chambre de combustion

t = 4,42, correspondant à une température $T_2$ de 1000°C

dans la chambre de combustion

t = 5,81, correspondant à une température $T_2$ de 1400°C

dans la chambre de combustion

Pour chaque valeur de t calculons une série de valeurs de W (puissance nette) de l'équation (6) utilisant pour chaque calcul diverses valeurs de K, disons entre 1,0 et 12,0. Le facteur 2,5 $P_1 V_m$ peut être laissé de côté sans affecter la discussion. Les résultats de ces calculs sont présentés graphiquement dans la figure 5, où l'abscisse est K, l'ordonnée étant la puissance disponible W. On voit tout de suite que la puissance s'accroît avec K jusqu'à ce qu'elle atteigne un maximum, et puis décroît lorsque K augmente davantage. La valeur de K qui donne la puissance maximale croît avec la température de la chambre de combustion.

Si l'on effectue les calculs avec l'équation (7) on obtient les résultats présentés à la figure 4, où l'abscisse est encore K, l'ordonnée étant le rendement. Ces graphiques montrent que le rendement croît avec K, mais non linéairement.

Les figures 4 et 5 montrent qu'une tentative de faire fonctionner un moteur basé sur des pompes à déplacement constant avec une valeur K < 1,0, comme il a été enseigné dans l'art antérieur, aurait comme résultat un bas rendement et une faible puissance. Lorsqu'on augmente K la puissance commence à décroître si l'on va trop loin. Par conséquent, pour un moteur donné on voudrait s'en servir avec K compris entre des limites assez bien définies. Par exemple, pour un moteur conçu pour une température de 700°C, on ne prendrait pas K plus grand que cinq environ à cause de la réduction de la puissance à partir de cette valeur; mais il serait raisonnable de prendre K autour de 4. De même, pour un moteur qui fonctionne à 1000°C on choisirait K au-dessous de 7,5, et, pour un moteur à 1400°C, au-dessous de 11.

Typiquement on serait enclin à choisir, suivant les graphiques de la figure 5, des valeurs de K entre celle qui correspond à la puissance maximum (c'est-à-dire $K_{max}$) et une valeur supérieure qui donne encore une puissance acceptable,

soit 1,5$K_{max}$ ou 2$K_{max}$. En adoptant cette règle, une gamme raisonnable pour les valeurs de K serait dans l'aire entre les droites A et B (fig. 5). A gauche de la droite A la puissance et le rendement baissent; à droite de B la puissance baisse sans une grande augmentation du rendement jusqu'à s'annuler pour des valeurs critiques de K correspondant à sa limite supérieure $K_{LIM}$ propre à chaque température de fonctionnement du moteur. Allons un peu au dessous de cette valeur critique. Alors il y a très peu de puissance disponible sur l'arbre; la plus grande partie de l'énergie disponible réside dans les gaz chauds et assez fortement comprimés qui sortent de la pompe motrice à haute vitesse. Avantageusement, ces gaz peuvent servir entre autres pour la propulsion à réaction. C'est ce qui a lieu dans un moteur à réaction classique, qui n'est autre chose qu'une turbine à gaz dont seulement une faible partie de la puissance est extraite sur l'arbre, pour dynamos, etc.

Des équations (6) et (7) on peut obtenir l'équation suivante pour $K_{max}$:

$$K_{max} = 0,41 \frac{1}{t}(0,4t + 1)^{3,5},$$

où t désigne encore le rapport de la température de combustion à la température ambiante. Normalement on éviterait les valeurs de K inférieures à $K_{max}$ à cause du bas rendement et de la basse puissance associée à ces valeurs.

## EXEMPLES

On peut effectuer les calculs sous des hypothèses pratiques. On trouve de grandes turbines à gaz qui fonctionnent avec une température d'environ 700°C dans la chambre de combustion, et nous commencerons avec ce cas de figure. Alors $T_1$ = 15°C = 288°K, $T_2$ = 973°K, (ici K siginifie Kelvin) d'où

$$t = T_2/T_1 = 3,38$$

Nous prenons $\tau$ = 1,40, donc c = 0,286. De (6) le travail net fourni est

$$W = 2,5 KP_1V_m(2,352 - 1,42K^{0,286})$$

Bien entendu il faut avoir W > 0, ce qui donne la condition

$$K < 5,85$$

commençons avec K = 5. Il résulte

$$W_{K=5} = 1,27 \ P_1 V_m, \ E = 55,6\%$$

On obtient la puissance maximum avec K = 2,42, et alors nous avons

$$W_{max} = 3,16 \ P_1 V_m \ ; \ E = 45\%$$

Pour un petit moteur on pourrait prendre par ex. $V_m$ = 50 $cm^3$, ce qui (pour la pompe à engrenages) correspond à un diamètre des engrenages de quelque 13 cm, pour une épaisseur de 2,5 cm. Prenons comme vitesse 5000 tours/minute = 83,33 tours/seconde. Alors nous obtenons ($P_1$ = 1,152 $kg/cm^2$)

$$W_{K=5} = 1,27 \ x \ 1,152 \ x \ 50 = 73,152 \ kg\text{-}cm$$

Multipliant par la vitesse, nous arrivons à

$$\text{puissance} = 60,958 \ kg\text{-}m/sec = 0,81 \ CV$$

Si l'on fait le même calcul avec K = 2,42, la puissance est égale à 2,01 CV.

Des températures bien plus élevées sont possibles, et de nombreux moteurs d'avions à réaction (leurs moteurs sont des des turbines à gaz) fonctionnent avec une température de combustion de 1400°C ou plus. Avec ce chiffre, nous avons t = 5,81. Nous trouvons que dans ce cas K ne peut pas dépasser 11,6. Pour K = 10 nous avons

$$W_{K=10} = 3,49 \ P_1 V_m; \ E = 68,6\%$$

La puissance maximale est fournie par K = 4,81, et alors

$$W_{max.} = 8,83 \ P_1 V_m; \ E = 61\%$$

Avec le même $V_m$ = 50 $cm^3$ et la même vitesse, ces chiffres correspondent à des puissances de 2,22 CV et 5,62 CV, respectivement.

On voit que le prix d'un haut rendement est une réduction de puissance, qu'on peut compenser en augmentant la vitesse ou $V_m$. Bien sûr, il y a des limites. On devrait tenir compte du fait que rendement ici signifie rendement idéal, écartant les pertes dues au frottement, à la turbulence dans la chambre, etc. Des fuites dans les pompes à engrenages réduiraient le rendement. Mais avec des pompes de bonne construction ce facteur devrait être minime, par contraste avec le cas de la turbine à gaz. Dans les machines thermiques pratiques, les pertes que nous avons laissées de côté, bien qu'importantes dans le fonctionnement, sont petites en comparaison avec les pertes inévitables imposées par les lois de la thermodynamique.

Nous terminons nos exemples par le calcul de la pression interne $P_2$, utilisant (2) avec $P_1$ = 1,152 kg/cm² . Pour le premier cas, t = 3,38, nous avons $P_2$ = 19,3 kg/cm² pour K = 5, et $P_2$ = 9,36 kg/cm² pour K = 2,42. Pour le cas de 1400°C, t = 4,81, nous obtenons $P_2$ = 66,5 kg/cm² quand K = 10, $P_2$ = 29,95 kg/cm² pour K = 4,81. Ces pressions sont loin d'être extrêmes.

Selon d'autres considérations, le moteur (10) peut comporter d'autres particularités sans rapport avec la quantité K considérée plus haut. Par exemple (fig. 2) les dents (26a) des engrenages dans la partie motrice pourraient être en contact avec le carter (24a) seulement sur une zone proche de la sortie de la chambre de combustion facilitant ainsi le refroidissement de la section motrice. La zone A de cette partie, en aval de l'aire de contact entre les dents et le carter pourrait contenir un bain ou jet d'huile par lequel passent les dents. Le carter (24a) peut être muni d'ailettes ou entouré d'un bain refroidissant. Un refroidissement au moyen d'air forcé dans la direction axiale serait possible, surtout avec des engrenages à rayons. Pour augmenter le déplacement du moteur ou du compresseur, on peut se servir d'engrenages plus épais ou de grand diamètre. Rien n'exclut l'emploi d'engrenages très épais, auquel cas ils ressembleraient à des rouleaux et l'on parlerait plutôt de leur longueur que de leur épaisseur. De cette manière il serait possible de maintenir les forces centrifuges à un niveau acceptable dans certaines applications. Bien que des engrenages ordinaires figurent dans les dessins, il est possible dans certains cas, que des engrenages coniques, par exemple, aient un avantage mécanique. Il est également possible d'utiliser des engrenages hélicoïdaux pour avoir un fonctionnement plus régulier et plus silencieux. On notera aussi que le nombre de dents peut être aussi petit que deux (le compresseur du type Roots). En fait, avec une palette coulissante on peut avoir une seule "dent", comme dans le compresseur Rollator.

Quant à la chambre de combustion pour le moteur décrit ci-dessus, celles du type utilisé couramment dans les turbines à gaz seraient certainement adéquates. Ces chambres ont un goulet au bout vers le compresseur et se terminent en un ajutage à l'autre bout ; cette caractéristique est référencée (52) sur la figure 1. Dans la présente invention, l'ajutage serait probablement modifié afin de réduire la turbulence dans la chambre de combustion, considération non sans importance à cause des pertes d'énergie qui en résultent. Pour la même raison il serait utile d'installer des vannes près des orifices d'entrée du compresseur et du moteur, au lieu de permettre l'air de rencontrer de front et à haute vitesse les dents avançantes.

Le démarrage du moteur peut être assuré par des méthodes usuelles. Le démarrage serait considérablement facilité moyennant une simple canalisation avec un organe d'échappement formant décompresseur, par exemple une simple valve by-pass, reliée à la chambre de combustion permettant l'échappement d'une certaine quantité d'air, réduisant ainsi la pression interne pendant le démarrage.

Le carburant peut être introduit dans la chambre de combustion par divers moyens par exemple un carburateur ou un ajutage (non représenté) placé dans le goulet. Dans ce cas les carburants liquides sont fournis sous haute pression dans la chambre (par exemple environ 5000 psi) pour assurer une bonne pulvérisation. Naturellement avec une injection du carburant il faut une pompe adéquate, par ex. une petite pompe à engrenages. L'allumage peut être obtenu par une étincelle électrique dans la chambre (par exemple bougie d'allumage (42)). Les carburants gazeux seraient tout aussi utiles.

Le moteur décrit plus haut offre des avantages considérables sur les autres types de moteur à combustion interne. Il unit la simplicité de la turbine à gaz avec les caractéristiques supérieures des moteurs à piston. Le rendement (idéal) des turbines à gaz est typiquement inférieur à 25% à une température de combustion autour de 700°C contre 45% pour le moteur ici traité (fonctionnant au régime de puissance maximale). Il est utile de comparer le présent moteur avec le moteur à essence (cycle Otto) et le moteur Diesel. Dans les moteurs à essence, le rapport de compression C ne peut normalement dépasser huit ou neuf. Pour C = 6 le rendement est de 51% et pour C = 7 il est de 55%. Le moteur Diesel avec C = 14 produit un rendement de 55%, et de 59% pour C = 16. Chacun de ces moteurs a des périodes de très haute pression pendant son fonctionnement. Comme déjà indiqué, dans le moteur décrit ici, des températures bien plus élevées que 700°C sont praticables, d'où un rendement plus grand que celui des moteurs Diesel et à essence d'usage commun.

Le moteur décrit ici peut fonctionner avec une grande variété de combustibles, y compris les huiles lourdes. Comme les températures de fonctionnement sont très au-dessous de celles rencontrées pendant une partie de leur cycle par les moteurs Diesel et à essence, la production de gaz polluants est considérablement réduite.

REVENDICATIONS

1. Moteur à combustion interne comprenant, dans le sens du passage du fluide moteur, une section compresseur, une chambre de combustion en continu et une section motrice, lesdites sections compresseur et motrice comprenant chacune une pompe volumétrique rotative dont le déplacement est sensiblement proportionnel à la rotation angulaire de son arbre, la pompe motrice étant reliée à la pompe de compression pour entraîner celle-ci en rotation, caractérisé en ce que le rapport K du volume $V_c$ déplacé par le compresseur à celui $V_m$ déplacé par la pompe motrice lorsque l'arbre de cette dernière subit une rotation donnée, est supérieur à l'unité.

2. Moteur à combustion interne selon la revendication 1, caractérisé en ce que ledit rapport K a une valeur d'environ 2,5 ou plus pour un moteur dont la chambre de combustion est à une température de 700°C environ et une valeur d'environ 10 ou plus pour une température de 1400°C environ.

3. Moteur à combustion interne selon la revendication 1, caractérisé en ce que ledit rapport K a une valeur sensiblement en deçà de sa valeur limite supérieure K $_{LIM.}$ pour un fonctionnement au moins partiel en moteur à réaction.

4. Moteur à combustion interne selon la revendication 1, caractérisé en ce que les pompes sont des pompes à engrenages comprenant chacune au moins une roue dentée dans un carter.

5. Moteur à combustion interne comprenant dans le sens du passage du fluide moteur une section de compression ayant des orifices d'entrée et de sortie, une chambre de combustion, et une section motrice munie d'une entrée et d'une sortie, ladite chambre de combustion étant en communication avec ledit orifice de sortie de la section de compression et avec l'orifice d'entrée de la section motrice, ladite section compresseur comprenant une pompe volumétrique rotative pouvant déplacer en continu des portions élémentaires $V_c$ de gaz par l'orifice de sortie de la section de compression et dans la chambre de combustion, ladite section motrice comprenant une pompe volumétrique rotative pouvant déplacer en continu des

portions élémentaires $V_m$ de gaz de la chambre de combustion et par la section motrice, cette dernière étant mue par les portions de gaz s'y déplaçant; un mécanisme d'entraînement reliant la section motrice à la section de compression et propre à la faire tourner, caractérisé en ce que ledit mécanisme est apte à fournir un rapport K du volume déplacé par la pompe de compression au volume déplacé par la pompe motrice supérieur à 2,5 environ.

6. Moteur à combustion interne selon la revendication 5, caractérisé en ce que le rapport K est sélectivement variable par un moyen permettant de changer les vitesses de la pompe de compression relativement à celles de la pompe motrice.

7. Moteur à combustion interne selon la revendication 6, caractérisé en ce qu'il comprend un dispositif sensible à la charge du moteur en fonctionnement et capable d'augmenter ou de diminuer la vitesse de rotation de la pompe volumétrique de la section de compression relativement à la vitesse de rotation de la pompe volumétrique de la section motrice selon respectivement une diminution ou augmentation de la charge, avec l'effet respectif d'augmenter ou de diminuer K.

8. Moteur à combustion interne selon l'une quelconque des revendications précédentes, caractérisé en ce qu'il comprend un organe d'échappement réglable formant décompresseur disposé sur une canalisation reliée à la chambre de combustion et ayant pour effet de réduire la pression interne pour faciliter le démarrage.

9. Procédé pour le fonctionnement d'un moteur à combustion interne du type comprenant dans le sens du passage du fluide moteur une section de compression munie d'orifices d'entrée et de sortie, une chambre de combustion, et une section motrice munie d'orifices d'entrée et de sortie, ladite chambre de combustion étant en communication avec la sortie de ladite section compresseur et avec l'entrée de ladite section motrice, ladite section de compression comprenant une pompe volumétrique rotative pouvant déplacer en continu des portions $V_c$ de gaz de la sortie de ladite section de compression dans la chambre de combustion, ladite section motrice comprenant une pompe volumétrique rotative propre à déplacer des portions Vm de gaz de la chambre de combustion à travers ladite section motrice, cette dernière étant mue par lesdites portions s'y déplaçant, un mécanisme d'entraînement reliant ladite section motrice à ladite section de compression et propre à la faire tourner, caractérisé en ce qu'on effectue à l'aide d'un moyen dudit mécanisme le réglage de la vitesse de rotation de la pompe volumétrique de la section de compression relativement à la vitesse de rotation de la pompe volumétrique de la section motrice de telle manière que le rapport K du volume déplacé par le compresseur au volume déplacé par la pompe motrice soit supérieur à 2,5 environ et, selon la charge accrue ou diminuée du moteur, qu'il y ait ajustement de la vitesse de rotation de la pompe volumétrique de la section de compression relativement à la vitesse de rotation de la pompe volumétrique de la section motrice.

10. Procédé pour un fonctionnement au moins partiel du moteur selon la revendication 1 et 3 en moteur à réaction, caractérisé en ce qu'on choisit le rapport K sensiblement en deçà de sa valeur limite supérieure $K_{LIM}$..

FIG.1

0246955

1 / 2

FIG.2

FIG.3

PRESSION

VOLUME

FIG.4

FIG.5